# EUROPEAN PATENT APPLICATION

(11) **EP 2 409 954 A1**
(43) Date of publication of application: **25.01.2012**
(21) Application number: 10275076.7
(22) Date of filing: 20.07.2010
(51) Int. Cl.: C02F 1/30, C02F 1/44, B01J 19/12, B01J 35/00, B01J 21/18, B01D 69/04, B01D 53/00, C02F 1/72, C02F 1/32, C02F 9/00

(54) **Photocatalytic purification device**

(71) Applicant: National Center for Scientific Research Demokritos, 15310 Athens (GR); Innovative Research & Technology Limited, London WC1B 5LF (GB)
(72) Inventor: Falaras, Polycarpos, 15351, Pallini Attikis (GR); Romanos, Georgios, 15562, Cholargos Attikis (GR); Aloupogiannis, Panagiotis, 14341, Nea Philadephia Attikis (GR)
(74) Representative: Holmes, Derek Malcolm

(57) **Abstract**

A photocatalytic reactor (10) for the treatment of contaminated fluids, such as water, is described. The reactor comprises a first flow channel (18) for receiving fluid from an inlet means, a second flow channel (22) for delivering fluid to an outlet means, a selectively-permeable filtration membrane (16) intermediate the first and second flow channels (18, 22), having a first surface (26) that receives fluid from the first flow channel (18) and an opposite second surface (24) defining, at least in part, the second fluid flow channel (22), and at least one photocatalyst support (28) disposed in the first flow channel (18). The first and second surfaces (24, 26) of the filtration membrane (16) and the photocatalyst support (28) each comprise an immobilised photocatalytic material capable of catalysing photocatalytic breakdown of contaminants in the fluid, in use of the reactor. The fluid therefore undergoes three photocatalytic treatment stages and a filtration stage during its passage through the reactor.

## Description

### Field of the invention

The present invention relates to a photocatalytic purification device. In particular, but not exclusively, the invention relates to a photocatalytic reactor for removing organic contaminants from fluids such as water.

### Background to the invention

The treatment of water and other fluids to remove organic contaminants is becoming increasingly important. In particular, untreated water often contains hazardous materials such as toxins and endocrine-disrupting compounds, harmful bacteria and other micro-organisms that can cause serious health problems if ingested by humans or animals. Similarly, untreated waste water from industrial or agricultural processes can contain organic pollutants, such as organic dyes, phenols and pesticides, which can be detrimental to heath and/or environmentally damaging. In the context of potable water, the presence of specific contaminants can impair the water quality including flavour and smell. In many situations, it is necessary to kill bacteria and micro-organisms, and to degrade or decompose the organic pollutants, in order to make water safe for drinking, bathing, or to treat waste water before discharging it into the environment.

A multitude of water treatment techniques are known in the art. Some techniques, such as chlorination, involve the addition of oxidising chemicals, but such chemicals can themselves be harmful. Filtration techniques, such as micro-, nano-, and ultra-filtration, rely on preventing contaminants above a certain size from passing through a filtration membrane. Such methods can be ineffective in removing small organisms and molecules, and can lose efficiency at high flow rates. Another approach is the trapping of contaminants, such as by absorption on activated carbon. However, this results in a contaminated solid, which must be disposed of safely.

Photocatalytic oxidation is a known water purification technique that avoids some of these drawbacks. In this case, water is directed into contact with a photocatalytic medium, such as nanostructured titanium (IV) oxide (TiO₂, also known as titania). When light of a suitable wavelength is incident on the photocatalytic medium, the medium absorbs photons, generating photocarrier pairs (holes and electrons) in the valence and conduction bands of the material. The holes can oxidise water to form reactive hydroxyl radicals, which subsequently react with organic molecules to cause their breakdown. Direct oxidation of organic molecules adsorbed onto the surface of the photocatalytic medium can also occur. The electrons can reduce oxygen to form superoxide anions, which again can react with organic molecules. In these ways, the use of a photocatalytic medium can prove an effective way of degrading harmful organic contaminants in water.

Photocatalysis is particularly advantageous compared to other treatment techniques because the energy required can be supplied by natural light, or by solar-powered artificial light. Therefore, in many cases, photocatalysis can operate without an external source of energy, and furthermore no energy is required to dispose of contaminated by-products or effluent from the treatment process.

Titania is a favoured material for use in the photocatalytic treatment of water because it is relatively inexpensive, non-toxic, chemically stable and has a high photocatalytic activity. As with other photocatalytic materials, the photocatalytic properties of titania depend heavily on the size, shape and morphology of the particles and their surface characteristics, and on the surface area to volume ratio of the particles. Accordingly, considerable efforts in materials engineering focus on methods for preparing homogeneous particles of titania and similar materials with controllable and tightly-defined particle size and shape.

The present Applicant's International Patent Application Publication No. WO-A-2007/085911, the contents of which are incorporated herein by reference, describes the synthesis of photocatalytic materials, in particular titania particles, having a substantially homogeneous particle size. In the method described therein, an inorganic crystalline matrix of titania is formed within a sol-gel reaction process under conditions that constrain the growth of the matrix. In this way, a majority of the resulting titania nanoparticles are of a narrow size distribution and do not exceed a maximum diameter of around 100 nm. Such nanoparticles demonstrate improved photoactivity when exposed to UV light, and can also include visible light-absorbing centres such that photoactivity is extended into the visible light range.

It is known to use photocatalytic material, such as titania, in water purifying reactors, in which water for treatment is caused to flow over the surface of, and around, the photocatalytic material. As will be appreciated, the amount of water that can be adsorbed onto the surfaces of the photocatalytic material is relatively small, and therefore the effectiveness of such a reactor depends mainly on the diffusive mixing of contaminant molecules and oxidising species within the flow paths of the reactor.

Accordingly, the efficiency of a reactor (i.e. the amount of contaminant material that can be rendered harmless for a given flow rate of water through the reactor) depends, in part, on the surface area of photocatalytic material per unit volume of flow path available for the water to be treated. For example, a reactor in which the water to be treated follows narrow, tortuous flow paths around the photocatalytic material will typically be more efficient than a reactor in which the flow paths are wide and straight.

Reactor efficiency is also dependent on the amount of light of the appropriate wavelength that falls on the surface of the photocatalytic material. Therefore, the design of a reactor must also take into account that the photocatalytic material must be arranged in such a way as to maximise the surface area of photocatalytic material that can be exposed to light.

One known type of photocatalytic reactor comprises a column packed solidly with particles of photocatalytic material. In use, contaminated liquid is passed through the column such that the water flows around and between the particles. While this arrangement offers good surface area to flow path volume ratio, the transmission of light through the packed particles is poor and so particles towards the interior of the column are photocatalytically ineffective. Moreover, a filtration arrangement must be provided to prevent the photocatalytic particles themselves from contaminating the water.

In another known type of photocatalytic reactor, a layer of photocatalytic material is coated on the interior surface of a tube through which the liquid flows, in use. The tube is transparent to light of the appropriate wavelength, such that the immobilised photocatalytic material is readily illuminated. In similar arrangements, the photocatalytic material is provided on the surface of a transparent plate, over which the liquid is directed.

For example, US Patent Publication No. US-B-6409928 describes a photocatalytic reactor in which photocatalytic material is provided on an outer side of a porous tubular membrane. An oxidant gas or liquid (such as ozone, hydrogen peroxide or ozone) is fed through the membrane from the inside of the tubular membrane, and the liquid to be treated is directed towards the outer side. The photocatalytic material is illuminated with a UV lamp positioned in the bore of the tubular membrane. Oxidising reactions take place at the surface of the photocatalytic material.

In such devices, the immobilised photocatalytic material can be effectively illuminated. However, the surface area of photocatalytic material to flow path volume ratio is relatively low, and the efficiency of the reactor is limited by the long diffusion and mass transport lengths involved.

In another approach, a known photocatalytic reactor comprises a reaction in which particles of photocatalytic material can be dispersed in a suspension in the contaminated liquid. This maximises the surface area of the photocatalyst material available for reaction. However, light transmission into the interior of the suspension can be poor, and the mobile photocatalyst particles can be difficult to separate from the liquid, for example by filtration, once treatment is complete.

International Patent Application Publication No. WO-A-2008/050119 describes a reactor that seeks to address the problem of separating the mobile photocatalyst particles. The reactor comprises an upright reaction chamber having a plurality of perforated cups that contain mobile photocatalyst particles. Water for treatment flows up through the reaction chamber. The particles are of a size and density such that, instead of forming a suspension in the water, they settle into the cups. An aeration device causes gas bubbles to rise through the reaction chamber, resulting in agitation of the mobile photocatalyst particles. In this way, the water flows around the photocatalyst particles, but the particles do not become entrained in the water flow. However, in this device, the particle size of the photocatalyst material cannot be selected to optimise the photocatalytic behaviour, and illumination of particles towards the interior of the aerated mass of particles can be poor.

Against this background, it would be desirable to provide a photocatalytic reactor for the treatment of contaminated fluids that presents a high surface area of photocatalytic material per unit volume of fluid flow path whilst allowing excellent illumination of the photocatalytic material, and which does not suffer from the problems of the prior art. It would also be desirable to provide materials and components for use in such a reactor.

### Summary of the invention

From a first aspect, the present invention provides a photocatalytic reactor for the treatment of contaminated fluids, comprising a first flow channel for receiving fluid from an inlet means, a second flow channel for delivering fluid to an outlet means, a selectively-permeable filtration membrane intermediate the first and second flow channels having a first surface that receives fluid from the first flow channel and an opposite second surface defining, at least in part, the second fluid flow channel, and at least one photocatalyst support disposed in the first flow channel. The first and second surfaces of the filtration membrane and the photocatalyst support each comprise an immobilised photocatalytic material capable of catalysing photocatalytic breakdown of contaminants in the fluid, in use of the reactor.

In one embodiment, the first and second surfaces of the filtration membrane and/or the photocatalytic support each carry the immobilised photocatalytic material, for example as a coating or surface layer.

Such a reactor offers several advantages compared to existing continuous single pass reactors using immobilized photocatalysts. In particular, the reactor combines photocatalytic treatment with filtration treatment, such that a sequential degradation action occurs within the reactor. Three active photocatalytic surfaces are provided, which ensures a high photocatalytic specific surface area to reactor volume ratio.

The filtration membrane may be tubular, such that the second flow channel comprises a bore of the filtration membrane.

A bore of the filtration membrane may receive a light source for illuminating the photocatalytic material. The light source may comprise an artificial light source, such as an LED light source, or may be arranged to direct natural light towards the photocatalytic material. When an artificial light source is used, it may be powered by a green energy source, such as a photovoltaic array or solar cell.

The fluid may be supplied to the inlet means under elevated pressure. The elevated fluid pressure may be achieved by means of gravity, or by pumping or pressurising means, optionally operated by a green energy source such as solar or wind power. Accordingly, in some configurations, a reactor according to the invention does not require an external power source, and can therefore operate in remote areas and with no energy consumption.

The reactor may comprise a first transparent tubular member that defines, in part, the first flow channel. When a tubular filtration membrane is provided, the first tubular member may be arranged concentrically around the filtration membrane.

The reactor may further comprise an intermediate fluid flow channel for receiving fluid from the first flow channel. The intermediate flow channel may be defined, in part, by the first surface of the filtration membrane. The reactor may comprise an intermediate transparent member having an outer surface that defines, in part, the first flow channel and an inner surface that defines, in part, the intermediate flow channel.

In this way, the or each photocatalytic support may be located in the intermediate fluid flow channel. Accordingly, the fluid is constrained to flow around the or each photocatalyst support, thereby maximising the contact between the fluid and the photocatalytic material, and therefore the opportunity for photocatalytic reaction.

In industrial applications, it is desirable to ensure a high throughput of fluid to be treated, without reducing the photocatalytic surface area to reactor volume ratio.

Accordingly, in a second aspect of the invention, there is provided a photocatalytic reactor for the treatment of contaminated fluids, comprising an inlet flow channel for receiving fluid from an inlet means, and a plurality of reactor sub-assemblies. Each sub-assembly comprises:
an outlet flow channel for delivering fluid to an outlet means of the reactor;
a selectively-permeable filtration membrane intermediate the inlet and outlet flow channels, the filtration membrane having a first surface that receives fluid from the inlet flow channel and an opposite second surface defining, at least in part, the outlet flow channel; and
a plurality of photocatalyst supports disposed in the inlet flow channel around the filtration membrane.

In this second aspect of the invention, the first and second surfaces of each of the filtration membranes and each of the photocatalyst supports comprise an immobilised photocatalytic material capable of catalysing photocatalytic breakdown of contaminants in the fluid, in use of the reactor.

As in the first aspect of the invention, the components of each sub-assembly in this second aspect facilitate a three-stage photocatalytic treatment process, combined with a filtration treatment stage. Any suitable number of sub-assemblies can be provided, such that the reactor of the second aspect of the invention can be readily scaled-up to treat water on an industrial scale without affecting the efficiency of the treatment process.

Optionally, each sub-assembly may comprise an intermediate fluid flow channel for receiving fluid from the inlet flow channel, the intermediate flow channel being defined, in part, by the first surface of the filtration membrane.

The reactor may further comprise a transparent intermediate member having an outer surface that defines, in part, the first flow channel and an inner surface that defines, in part, the intermediate flow channel.

The reactor of the second aspect of the invention may, like some embodiments of the first aspect of the invention, have a tubular configuration. For instance, the reactor of the second aspect may comprise a tubular member, wherein the inlet flow channel comprises a bore of the tubular member. The reactor may further comprise an inner tube that defines, in part, the inlet flow channel and that receives a light source for illuminating the photocatalytic material.

In both the first and second aspects of the invention, the photocatalyst supports may comprise porous polymeric fibres. The fibres may include embedded carbon nanotubes decorated with photocatalyst particles.

The photocatalytic material in either aspect of the invention may comprise a porous titania composition having a particle size distribution in which a majority of the particles do not exceed a maximum diameter of around 100 nm. The same material may be used in all locations of the photocatalytic material, or different materials could be used in the respective locations.

The tubular reactor design that is an optional feature of both the first and second aspects of the invention is advantageous because it readily allows the reactor components to be changed for components of different sizes and/or of different materials. In particular, when the reactor comprises one or more tubular filtration membranes and/or one or more photocatalytic supports, such as fibres, the membrane and/or the supports can be easily replaced to introduce an alternative photocatalytic material to the reactor or to change the pore size of the filtration membrane. In this way, the reactor of the invention can be used as an analytical tool in the development of filtration materials and photocatalytic materials.

Furthermore, in industrial and commercial applications, a reactor according to the first or second aspects of the invention and being of tubular design can be readily optimised for the particular contaminant type and quantity and the extent of treatment required, by the installation of appropriate tubular reactor components. In the case of the second aspect of the invention, the number of sub-assemblies can similarly be selected as appropriate to meet the requirements of the application.

Both the first and second aspects of the invention advantageously provide photocatalytic reactors that treat fluid by passing the fluid through first, second and third photocatalytic treatment stages, and through a filtration treatment stage. Accordingly, the present invention extends to a method for treating contaminated fluid, the method comprising exposing the fluid to a first immobilised photocatalyst, exposing the fluid to a second immobilised photocatalyst, passing the fluid through a filtration membrane, and exposing the fluid to a third immobilised photocatalyst.

It will be appreciated that the photocatalytic reactors of the present invention can be used for the treatment of liquids, such as waste water, and for the treatment of gases, such as steam.

Preferred and/or optional features of each of the aspects of the invention may also be used, alone or in appropriate combination, with the other aspects of the invention also.

### Brief description of the drawings

Embodiments of the present invention will now by described, by way of example only, with reference to the accompanying drawings, in which like reference numerals are used for like parts, and in which:
Figure 1 is a schematic perspective view showing a photocatalytic reactor assembly according to a first embodiment of the present invention;
Figure 2 is a schematic horizontal cross-sectional view on line A-A of the photocatalytic reactor assembly shown in Figure 1;
Figure 3 is a schematic vertical cross-sectional view on line B-B of the photocatalytic reactor assembly shown in Figure 2;
Figure 4 is a schematic perspective view showing a photocatalytic reactor assembly according to a second embodiment of the present invention;
Figure 5 is a schematic vertical cross-sectional view of a photocatalytic reactor including a reactor assembly of the type shown in Figure 4;
Figures 6(a) and 6(b) are schematic perspective views showing, respectively, upper and lower flange components of the photocatalytic reactor of Figure 5;
Figure 7 is a schematic horizontal cross-sectional view showing a photocatalytic reactor assembly according to a third embodiment of the invention;
Figure 8 is a schematic horizontal cross-sectional view showing a photocatalytic reactor assembly according to a fourth embodiment of the invention; and
Figure 9 is a schematic perspective view of the photocatalytic reactor assembly shown in Figure 8.

### Detailed description of preferred embodiments of the invention

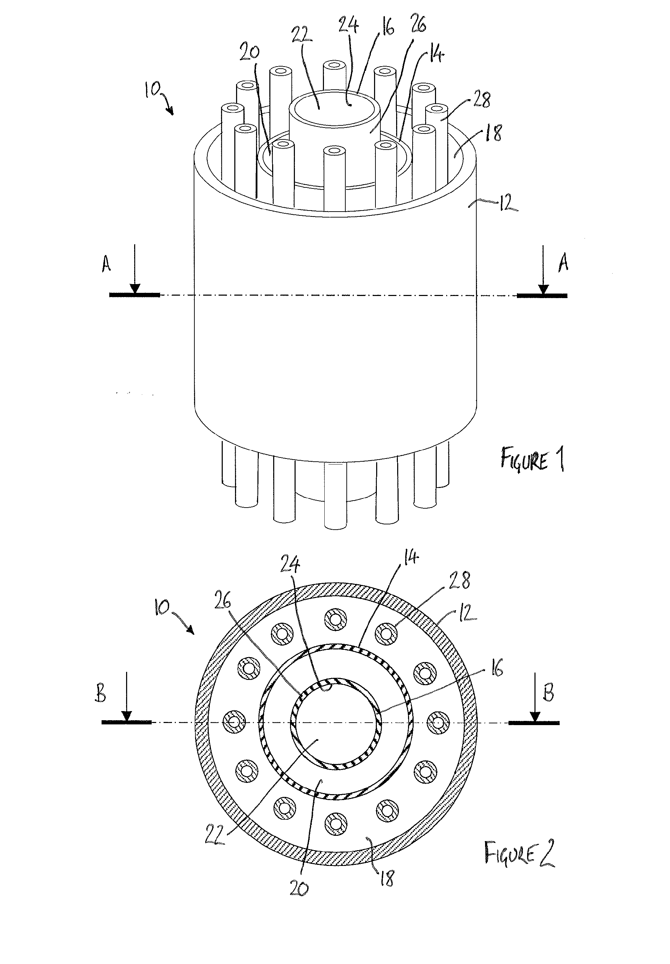

Figures 1 to 3 show a photocatalytic reactor assembly 10 according to a first embodiment of the invention. The reactor assembly 10 comprises three concentric tube members, namely an outer tube member 12, an intermediate tube member 14, an inner tube member in the form of a tubular nanofiltration membrane 16.

Each tube member 12, 14, 16 extends along a common central axis of the assembly 10. In this way, an outer flow channel 18 is defined between the outer tube member 12 and the intermediate tube member 14, an intermediate flow channel 20 is defined between the intermediate tube member 14 and the nanofiltration membrane 16, and an inner flow channel 22 is defined by the bore of the nanofiltration membrane 16.

In use, the reactor assembly 10 is mounted between suitable flanges (not shown in Figures 1 to 3) that close the upper and lower ends of each of the tube members 12, 14, 16. As will be described in more detail below, the flanges provide inlet and outlet means and suitable passages to direct fluid flow through the reactor assembly 10 via the outer, intermediate and inner flow channels 18, 20, 22. In this way, the reactor assembly 10 provides a reactor cell of a photocatalytic reactor for the removal of organic contaminants from liquid or gas.

The outer tube member 12 comprises a tube of fluid-tight, transparent material having a relatively large diameter. The intermediate tube member 14 similarly comprises a fluid-tight, transparent tube, having a smaller diameter than the outer tube member 12. Suitable materials for the outer and intermediate tube members 12, 14 include glass, such as borosilicate glass, and transparent plastics, such as poly(methyl methacrylate), also known as perspex or plexiglass.

As noted above, the inner tube member comprises a tubular nanofiltration membrane 16, made from a ceramic material such as alumina and having a porous structure with a well-defined pore-size distribution. The nanofiltration membrane 16 allows species having a size less than the maximum pore size to pass through the membrane, and blocks the passage of larger species. In one example, the maximum pore size of the nanofiltration membrane 16 is 2 nm, which is sufficient to prevent relatively large organic molecules (such as pesticides and herbicides) and bacteria from passing through the membrane 16.

The inner and outer surfaces 24, 26 of the nanofiltration membrane 16 are coated with a photocatalytic material, such as titanium (IV) oxide (titania), to provide an active nanoporous photocatalyst layer on each surface 24, 26. The photocatalytic material may be deposited on the surfaces 24, 26 by a suitable physical or chemical method, such as pyrolytically by chemical vapour deposition, or by sol-gel dip coating. The photocatalytic material may be doped, for example with carbon, to influence the photoactivity of the material. The photocatalytic layers are sufficiently porous that they do not alter the filtration characteristics of the nanofiltration membrane 16.

A plurality of asymmetric photocatalyst fibres 28 extend vertically through the outer flow channel 18 of the reactor assembly 10. In this example, twelve photocatalyst fibres 28 are provided, but it will be appreciated that fewer (for example, as few as three or six) or more (for example, as many as twenty-four or thirty-six) fibres could be provided. The fibres 28 comprise single- or multi-walled carbon nanotubes partially embedded in a porous matrix. The matrix of the fibres 28 is a transparent polymer, such as poly(methyl methacrylate) or polysulfonic acid. The carbon nanotubes are decorated with photocatalyst particles, such as titania particles, such that the photocatalyst particles are immobilised on the fibres 28.

The asymmetric porous fibres 28 may be manufactured using an immersion-induced phase inversion technique, such as is described in United States Patent No. 5708040, the contents of which are incorporated herein by reference. In such a case, the porous fibres 28 are formed by the extrusion of blends of light transparent polymer solutions with suspensions of carbon nanotubes decorated with a suitable photocatalyst material.

The phase inversion technique results in the formation of an asymmetric pore structure comprising a microporous skin layer on the outer surface of the polymeric fibre, having a thickness of approximately 200 nm and a pore size of less than about 2 nm, and an macroporous internal bulk structure, having pore sizes of between about 0.5 µm and about 2 µm.

In an alternative manufacturing process, the fibres 28 are produced by electrospinning.

In use, the reactor assembly 10 is illuminated with light of a suitable wavelength to cause photocatalytic activity in the immobilised photocatalyst material of the fibres 28 and of the photocatalytic layers on the inner surface 24 and the outer surface 26 of the nanofiltration membrane 16.

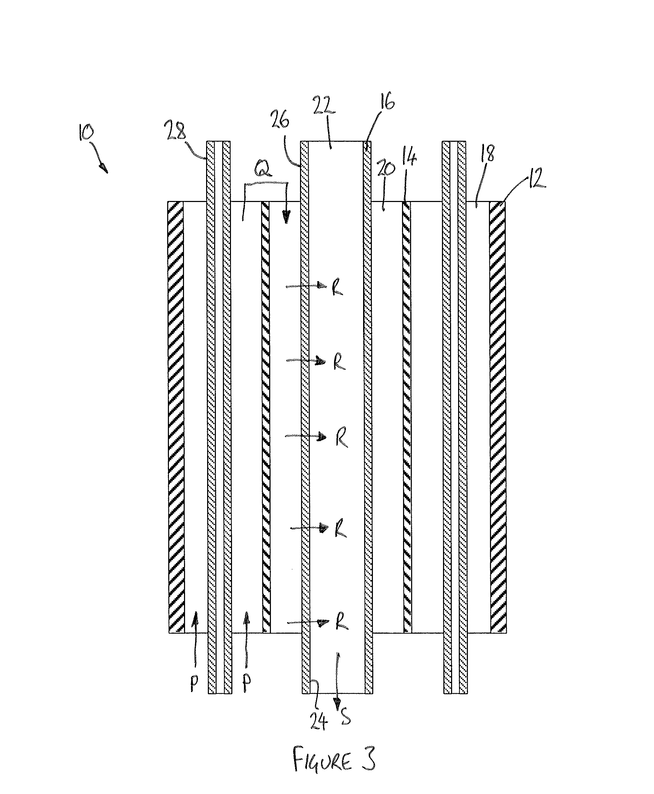

Referring in particular to Figure 3, the flow of liquid through the reactor assembly 10 during photocatalytic treatment will now be described.

Fluid for treatment is fed under pressure into the reactor assembly 10 from the lower end of the outer flow channel 18, as indicated by arrows P in Figure 3. The fluid flows up the outer flow channel 18, around the photocatalyst fibres 28, to the upper end of the assembly 10. The contact between the photocatalyst fibres 28 and the fluid serves as a first photocatalytic treatment stage for the fluid, in which organic pollutants of high and low molecular weight undergo a first degradation action in the pores of the asymmetric fibres 28, where the fluid comes into intimate contact with the photocatalyst-decorated nanotubes.

The fluid flows from the outer flow channel 18, via passages in the upper flange (not shown), to the intermediate flow channel 20, as indicated by arrow Q. Fluid flows down the intermediate channel, whereupon it comes into contact with the photocatalytic layer on the outer surface 26 of the nanofiltration membrane 16 in a second photocatalytic treatment stage for the fluid. In this second photocatalytic treatment stage, pollutants that were not reacted in the first stage, along with degradation intermediates, undergo a second degradation action.

The fluid passes through the nanofiltration membrane 16 by permeating through the pores in the photocatalytic layers on the surfaces 24, 26 of the membrane and through the pores in the membrane 16 itself, as indicated by arrows R. In this way, the fluid is subjected to a nanofiltration treatment stage, through which only molecules and species with low molecular weight can pass.

The fluid then flows, under gravity, down the inner flow channel 22. Specifically, the fluid flows down the inner surface 24 of the nanofiltration membrane 16, in contact with the photocatalytic layer provided thereon. This provides a third photocatalytic treatment stage for the fluid, in which any remaining small molecular weight pollutants, uncharged pollutants, and small intermediate species are further degraded.

Having been subjected to the first, second and third photocatalytic treatment stages, and additionally to the nanofiltration treatment stage, the cleaned fluid is then discharged from the reactor assembly 10 via the lower end of the nanofiltration membrane 16 (arrow S).

In this way, the reactor assembly 10 operates in a flow-through mode, by passing the fluid through each of the photocatalytic treatment stages in turn and by forcing all of the fluid through the nanofiltration membrane 16 at a constant and controllable flow rate.

To generate photocatalytic activity in the photocatalytic fibres 28 and in the photocatalytic layers on the surfaces 24, 26 of the nanofiltration membrane 16, the reactor assembly 10 must be illuminated by a light source that provides light having a wavelength range that includes the wavelengths that activate the photocatalytic material in the fibres 28 and the layers, respectively. Depending on the photocatalytic material, UV light or visible light may be appropriate, and solar (natural) light or artificial light sources may be employed.

The outer and intermediate tubular members 12, 14, and the photocatalyst fibres 28, are transparent, allowing light to penetrate through the reactor arrangement 10 from the outside to the outer surface 26 of the nanofiltration membrane 16. Therefore the photocatalytic material on the fibres 28 and on the outer surface 26 of the nanofiltration membrane 16 can be irradiated by a light source provided externally to the reactor arrangement 10, or by exposing the reactor arrangement 10 to sunlight.

The nanofiltration membrane 16, however, is not sufficiently transparent to light to allow sufficient irradiation of the photocatalytic material on the inner surface 24 of the nanofiltration membrane 16. Accordingly, a light source may be provided in the bore of the nanofiltration membrane 16, in the inner flow channel 22, so as to irradiate the inner surface 24 of the membrane 16 and activate the photocatalytic material for the third photocatalytic treatment stage.

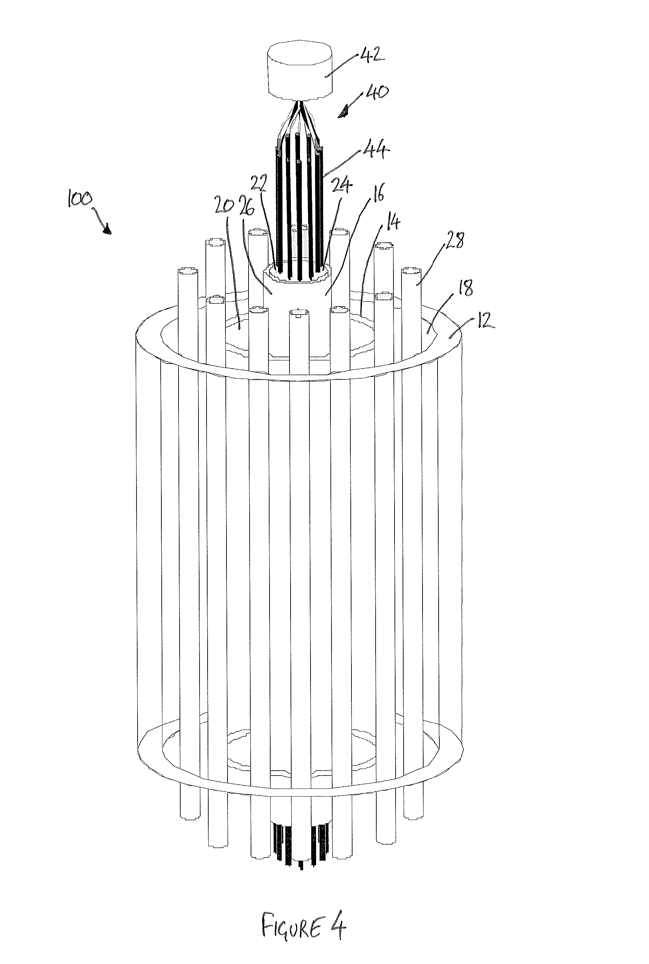

For example, Figure 4 shows a reactor arrangement 100 of the type shown in Figures 1 to 3, which additionally includes an elongate light source 40 that is accommodated in the inner flow channel 22, in the bore of the nanofiltration membrane 16. All of the other components shown in Figure 4 are as described with reference to Figures 1 to 3, and like reference numbers are used accordingly.

The light source 40 comprises a collector or lens 42 that directs light into a bundle of optical fibres 44. The optical fibres extend through the bore of the nanofiltration membrane 16 in a direction parallel to the common axis of the tubular members 12, 14, 16. The optical fibres 44 are appropriately treated (for example by calcination and etching with sodium hydroxide), so that they emit light from their surfaces.

In use, the lens 42 is arranged to receive light from a suitable light source (not shown), such as solar light or an artificial light source. The light is transmitted along the optical fibres, which in turn irradiate the inner surface 24 of the nanofiltration membrane 16, and hence the photocatalytic material provided thereon.

The photocatalytic material on the nanofiltration membrane 16 and the fibres 28 may undoped, or may be cation or anion doped. For example, titania may be doped with carbon or nitrogen. As will be appreciated by a person skilled in the art, appropriate doping can be used to shift the photocatalytic activity of the material into the visible light range, and co-doping or multiple-doping strategies may be employed to optimise the photocatalytic activity of the material. When titania is used as the photocatalytic material, the crystal structure of the titania may be selected from one its stable forms, namely anatase or rutile, as appropriate to achieve the desired photocatalytic behaviour taking into account any doping.

The particle size distribution of the photocatalytic material also affects its photocatalytic behaviour. The method of synthesising particles described in the present Applicant's International Patent Application Publication No. WO-A-2007/085911 gives rise to particles having a particularly desirable size distribution for use in the present invention and, accordingly, the photocatalytic material used in the present invention may be of a type described in WO-A-2007/085911. Reference should be made to WO-A-2007/085911 for details of the method and the resulting particles.

The inner and outer surfaces 24, 26 of the membrane 16 can be coated with the same photocatalytic material, or with different photocatalytic materials. Similarly, the photocatalytic material of the fibres 28 could be of the same as, or different from, the photocatalytic material on one or both surfaces 24, 26 of the membrane 16. For example, the inner surface 24 of the membrane 16 may be coated with a titania photocatalyst doped to optimise photocatalytic activity under irradiation by artificial light, as provided by the light source 40, whereas the outer surface 26 of the membrane 16 and the fibres 28 may carry a titania photocatalyst doped to optimise photocatalytic activity under irradiation by natural sunlight.

Photocatalytic reactor assemblies of the type described with reference to Figures 1 to 4 can be used in small-scale and large-scale photocatalytic reactors, as will now be described in turn.

### Description of small-scale photocatalytic reactor

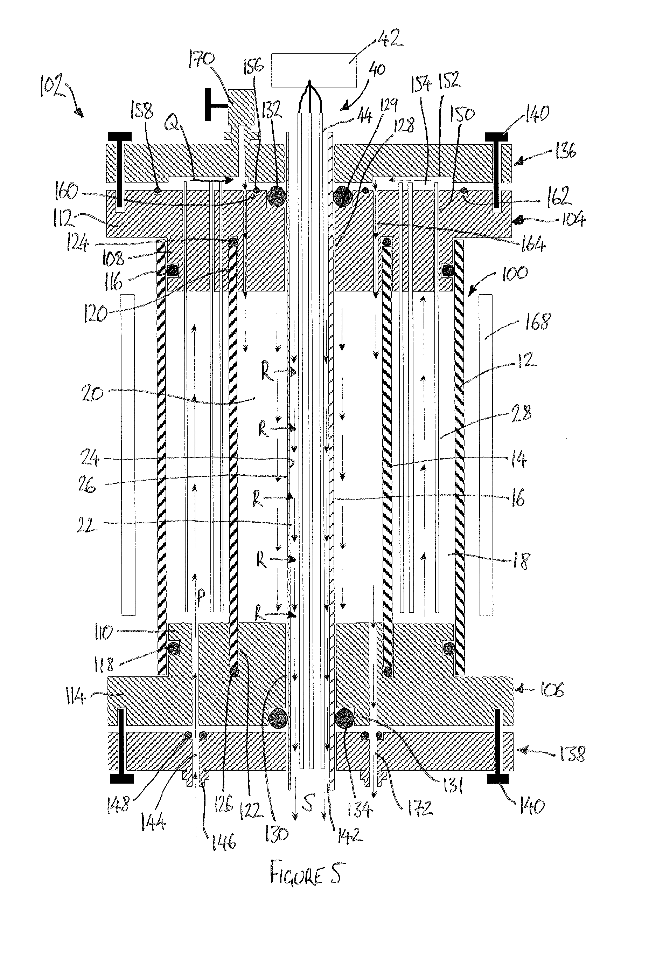

Figure 5 shows a small-scale photocatalytic reactor 102 including a reactor assembly 100 of the type shown in Figure 4. Again, like reference numerals are used for like parts.

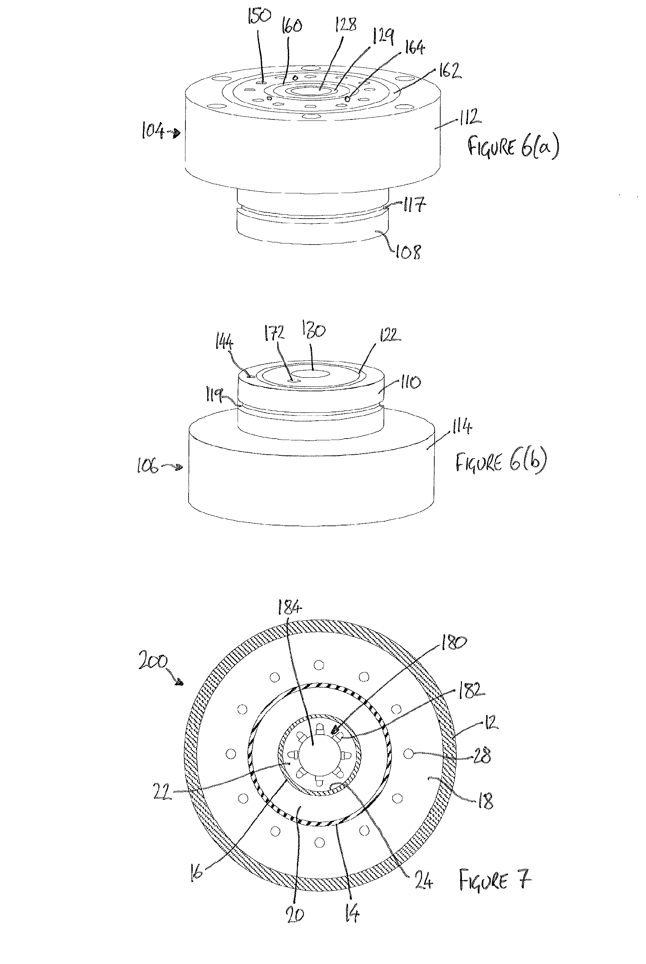

The reactor 102 comprises an top inner flange member 104 and a bottom inner flange member 106, shown additionally in Figures 6(a) and 6(b) respectively. The inner flange members are made from a suitable material such as stainless steel or a UV-light resistant polymer. Each inner flange member 104, 106 has a first portion 108, 110 with a diameter approximately equal to the inner diameter of the outer tube member 12, and a second portion 112, 114 having a diameter larger than that of the respective first portion 108, 110.

The first portions 108, 110 of the top and bottom inner flange members 104, 106 are received in the upper and lower ends, respectively, of the outer tube member 12, such that the inner flange members 104, 106 oppose one another across the reactor arrangement 100. The first portion 108, 110 of each inner flange member 104, 106 includes a circumferential recess or groove 117, 119 that accommodates an 'O' ring 116, 118, which forms a seal against the outer tube member 16.

The upper and lower ends of the intermediate tubular member 14 are received in blind cylindrical recesses or slots 120, 122 that extend from the respective bottom and top faces of the inner flange members 104, 106. In this example, the recesses 120, 122 are closed at the second portion 112, 114 of the inner flange members 104, 106. 'O' rings 124, 126 are provided in the base of each recess 120, 122, so as to form a seal against the respective ends of the intermediate tubular member 14.

The tubular nanofiltration membrane 16 is longer than both the outer and intermediate tubular members 12, 14. The upper and lower ends of the nanofiltration membrane 16 extend through a central aperture 128, 130 in the upper and lower inner flange members 104, 106, respectively. The respective top and bottom faces of the upper and lower inner flange members 104, 106 each incorporate a recess to form a peripheral shoulder 129, 131 around the respective aperture 128, 130. An 'O' ring 132, 134 is received in each shoulder 129, 131, each 'O' ring 132, 134 being mounted around the nanofiltration membrane 16.

Upper and lower outer flange members 136, 138 are also provided, which fit onto the top and bottom faces, respectively, of the corresponding upper or lower inner flange member 104, 106. In Figure 5, the outer flange members 136, 138 are shown slightly spaced from the inner flange members 104, 106 for clarity. In use, each outer flange member 136, 138 is held tightly against the corresponding inner flange member 104, 106 by way of suitable bolts 140. The outer flange members 136, 138 therefore compress the 'O' rings 132, 134 accommodated in the shoulders 129, 131 so as to form a seal around the upper and lower ends of the nanofiltration membrane 16.

The upper inner and outer flange members 104, 136, and the lower inner and outer flange members 106, 138 are supported by suitable support means (not shown), which apply a clamping force to urge the inner flange members 104, 106 into sealing engagement with the outer and intermediate tubular members 12, 14.

In this way, the outer fluid flow channel 18 is closed by the inner flange members 104, 106, by virtue of the 'O' rings 116, 118 in the circumferential grooves 117, 119 that seal against the outer tubular member 12 and by virtue of the 'O' rings 124, 126 in the annular recesses 120, 122 that seal against the intermediate tube member 14.

Similarly, the intermediate flow channel 20 is closed by the inner flange members 104, 106 and the outer flange members 136, 138, by virtue of the 'O' rings 132, 134 provided in the shoulders 129, 131 adjacent the apertures 128, 130 through which the nanofiltration membrane 16 extends.

The inner flow channel 22 is not closed by the flange members 104, 106, 136, 138, but is instead open at its lower end to provide an outlet 142 for treated fluid from the reactor 102. The upper end of the inner flow channel 22 is open to the environment.

Inlet drillings 144 are provided in the inner and outer lower flange members 106, 138, to allow fluid into the outer flow channel 18. Where the drillings 144 in the inner and outer lower flange members 106, 138 meet, an 'O' ring 148 is provided to prevent leakage from the join. A suitable inlet connection 146 is provided on the outer lower flange member 138 to allow connection of a supply line in use, to feed fluid for treatment into the reactor 102.

The photocatalytic fibres 28 are suspended in the outer flow channel 18, between the outer and intermediate tubular members 12, 14. An upper end of each fibre 28 is held in a corresponding fibre drilling 150 that extends through the upper inner flange member 104. The bottom end of each fibre 28 rests against the top face of the lower inner flange member 106 (although, for clarity, the bottom end of each fibre 28 is shown spaced from the top face of the lower inner flange member 106 in Figure 5).

Because the fibres 28 are porous, the fibre drillings 150 provide a flow path for fluid from the bottom face to the top face of the upper inner flange member 104. The bottom surface of the upper outer flange member 136 is provided with a relief region 152 that defines an annular gallery 154 into which fluid passes from the outer flow channel 18, via the fibre drillings 150. The annular gallery 154 is sealed on each side by inner and outer 'O' rings 156, 158 that are received in respective inner and outer circular grooves in the top face of the upper inner flange member 104.

The annular gallery 154 communicates with the intermediate flow passage 20 via through-drillings 164 disposed between the inner 'O' ring groove 160 and the cylindrical recesses 120. In this way, fluid can flow from the outer flow passage 18 to the intermediate flow passage 20, via the fibre drillings 150, the gallery 154, and the drillings 164.

As described with reference to Figure 4, the bore of the nanofiltration membrane 16 houses a bundle of optical fibres 44 of a light source 40. The optical fibres 44 emit light directed into the fibres 44 by a lens 42. In this way, the photocatalytic layer on the inner surface 24 of the nanofiltration membrane 16 can be illuminated with light of a suitable wavelength.

Optionally, an external light source 168 may be provided to illuminate the photocatalytic material in the fibres 28 and on the outer surface 26 of the nanofiltration membrane 16 with light of a suitable wavelength. Where the light source generates UV-light, the reactor may be housed in a UV-absorbing casing (not shown).

The photocatalysed breakdown reactions that occur in the reactor 102 generate gaseous by-products, for example carbon dioxide. Accordingly, the upper outer flange member 136 incorporates a gas relief valve 170 that allows venting of gas from the gallery 154, and hence from the outer and intermediate flow channels 18, 20.

The reactor 102 of Figure 5 operates as described with reference to Figures 1 to 3. Contaminated fluid at elevated pressure is admitted to the reactor 102 via the inlet drillings 144 and flows initially into the outer flow channel 18 (arrow P in Figure 5). A first photocatalytic treatment stage occurs as the fluid interacts with the photocatalytic material in the fibres 28. The fluid then flows into the intermediate flow passage 20, via the gallery 154 (arrow Q), whereupon it comes into contact with the photocatalytic material on the outer surface 26 of the nanofiltration membrane 16 to effect a second photocatalytic treatment stage.

The fluid then passes through the nanofiltration membrane 16, in a filtration treatment stage (arrow R). On passing into the inner flow channel 22, the fluid comes into contact with the photocatalytic material on the inner surface 24 of the nanofiltration membrane 16 to effect the third and final photocatalytic treatment stage. The treated fluid then flows to the outlet 142 (arrow S). When the fluid is water or another liquid, the flow to the outlet 142 is gravity-driven. When the fluid is a gas, an outlet pump may be provided to draw the treated gas out of the reactor.

The reactor operation described above is a through-flow operation, in which all of the fluid that enters the reactor 102 passes through all of the treatment stages before emerging from the outlet 142.

If required, the reactor 102 can instead be configured to operate in a cross-flow mode, by providing an optional intermediate outlet passage 172 in the form of drillings through the lower inner and outer flange members 106, 138, similar to the inlet drillings 144. The intermediate outlet passage 172 communicates with the intermediate flow channel 20, and is connected to an external back-pressure regulating device (not shown). In cross-flow operation, partially-treated fluid is caused to leave the intermediate flow channel 20 via the intermediate outlet passage 172 when the fluid pressure in the outer and intermediate flow channels 18, 20 exceeds a pre-determined pressure set by the back-pressure regulating device. The partially-treated fluid may then be fed back into the reactor 102 for re-treatment.

Figure 7 is a horizontal cross-sectional view through an alternative reactor assembly 200, which is also suitable for use in the reactor of Figure 5. The reactor assembly 200 is identical to the reactor assembly 102 of Figure 4, except in that, in the Figure 7 embodiment, an alternative light source 180 is provided.

The light source 180 comprises an array of light-emitting diodes 182, arranged around a central rod 184. The array extends around the circumference of the rod 184, and along substantially the whole length of the nanofiltration membrane 16. In this way, the light-emitting diodes 182 illuminate uniformly the inner surface 24 of the nanofiltration membrane 16 with a wavelength suitable for stimulating photocatalytic activity in the material of the photocatalyst layer. The light-emitting diodes 182 are preferably surface-mount devices that are electrically connected to conductors (not shown) on the rod 184.

### Example 1: small-scale photocatalytic reactor

By way of example, further details of a reactor 102 as shown in Figure 5 will now be described. In this example, which is designed for the treatment of water, the outer tubular member 12 is of borosilicate glass having an outside diameter of 60 mm, an internal diameter of 50 mm, and a length of 100 mm. The outer tubular member 12 is capable of operating at water pressures up to 12.5 bar.

The intermediate tubular member 14 is also of borosilicate glass having an outside diameter of 16 mm, an internal diameter of 14 mm, and a length of 100 mm. Because the water pressure on both sides of the intermediate tubular member 14 is equal, the pressure resistance of the intermediate tubular member 14 is not an important design consideration.

The tubular nanofiltration membrane 16 comprises a nanoporous alumina tube, with an outside diameter of 10 mm, an internal diameter of 7 mm, and a length of 150 mm. The characteristic pore size of the nanofiltration membrane 16 is 2 nm, and the maximum operating pressure of the membrane 16 is approximately 80 bar.

The nanofiltration membrane 16 is coated on its outer and inner surfaces 24, 26 with carbon-doped titania particles.

Twelve asymmetric fibres 28 are provided, each having an outside diameter of between 0.5 and 1.3 mm and a length of 100 mm. The fibres 28 are of poly(methyl methacrylate), with embedded carbon nanotubes decorated with nitrogen-doped titania particles. The fibres 28 are arranged around the intermediate tubular member 14 with a uniform angular spacing of 30° between the fibres. The fibres 28 are spaced from the intermediate tubular member 14 by a distance of at least 1-2 mm, so as to allow water to flow readily around the fibres 28. When in place, the fibres 28 rest on the top surface of the lower inner flange 106 and extend 1-2 mm above the top surface of the upper inner flange 104.

When contaminated water is supplied to the reactor 102 at a pressure of 12.5 bar, treated water emerges from the outlet 142 at a maximum rate of approximately 3.5 to 4 ml per minute. At this flow rate, the water is irradiated in the reactor 102 for at least approximately 50 minutes.

The total water capacity of the reactor 102 is the sum of the volumes of the outer and intermediate flow channels 18, 20. In this example, the reactor 102 has a total water capacity of 188 ml. The water in the reactor is exposed to photocatalytic material having a maximum surface area of 102 cm², i.e. a photocatalytic surface area-to-volume ratio of approximately 54 m⁻¹.

For comparison, a reactor with the same dimensions as the example described above, but with thirty-six asymmetric fibres each having an outside diameter of 1.3 mm, the maximum photocatalytic surface area is approximately 200 cm², giving a photocatalytic surface area-to-volume ratio of approximately 107 m⁻¹.

### Effect of nanofiltration membrane pore size

The flow rate through the reactor 102, and hence the irradiation time, can be modified by using a nanofiltration membrane 16 with a different pore size. Increasing the irradiation time and reducing the pore size results in the removal or degradation of a larger fraction of contaminants, at the expense of longer treatment time. The table below gives the approximate flow rate and minimum irradiation time for reactors having components of the same dimensions as the reactor described in Example 1 above with nanofiltration membranes 16 having different pore sizes, at an inlet pressure of 12.5 bar.

| **Approximate nanofiltration membrane pore size** | **Approximate outlet flow rate** | **Approximate minimum irradiation time** |
|---|---|---|
| 1 nm | 0.5-1 ml/min | 2 hours |
| 1.7 nm | 2.8-3 ml/min | 1 hour |
| 2 nm | 3.5-4 ml/min | 50 minutes |
| 3 nm | 40-45 ml/min | 4.5 minutes |
| 5 nm | 45-50 ml/min | 4 minutes |
| 10 nm | 55-60 ml/min | 3.5 minutes |

As will be understood from these examples, nanofiltration membranes 16 with pore sizes of approximately 3 nm or above offer significantly lower resistance to water flow than nanofiltration membranes 16 with pore sizes of approximately 2 nm or below.

### Description of large-scale photocatalytic reactor

It will be appreciated that, for industrial use, it is desirable to provide a reactor that can treat fluid at a higher flow rate than is possible with the small-scale reactor described in Example 1 above. Since the efficiency of the reactor depends, in part, on the photocatalytic material surface area to flow path volume ratio, simply scaling up the dimensions of the small-scale reactor described above will result in an unacceptable efficiency reduction.

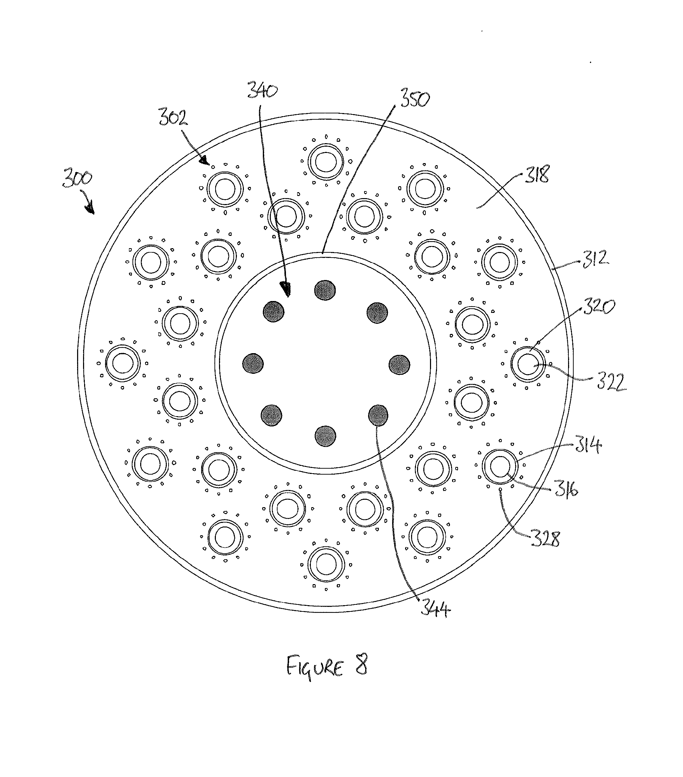

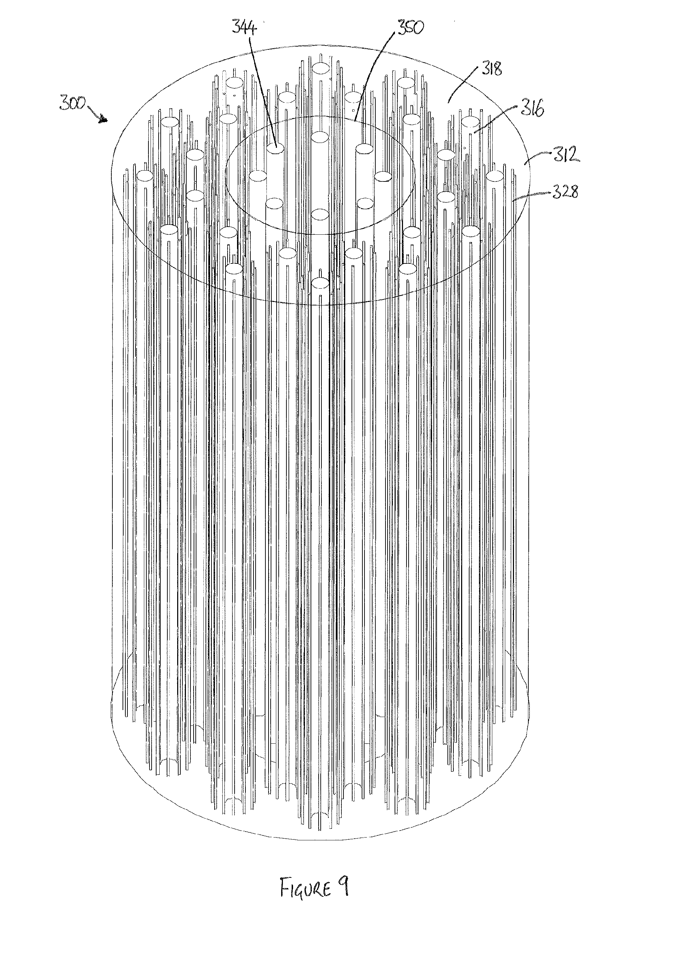

However, the reactor assembly described with reference to Figures 1 to 4 and 7 can be adapted for use in a large-scale reactor suitable for industrial use, as will now be described with reference to Figures 8 and 9.

The large-scale reactor assembly 300 is generally cylindrical, and comprises an annular inlet flow channel 318 defined between an outer tubular member 312 and an inner tube 350. The inlet flow channel 318 is closed at its top and bottom ends by suitable upper and lower flanges (not shown).

A plurality of photocatalytic reactor sub-assemblies 302 are disposed within the inlet flow channel 318. Each sub-assembly 302 includes the features of the small-scale reactor assembly 10 of Figures 1 to 3, with the exception of the outer tubular member 12, and reference should be made to the above description for details of the materials and desirable properties of equivalent components.

Accordingly, each sub-assembly 302 comprises an intermediate tubular member 314 in the form of a transparent tube of, for example borosilicate glass or plexiglass. The intermediate tubular member 314 surrounds a tubular ceramic nanofiltration membrane 316. As in the small-scale reactor assembly, the nanofiltration membrane 316 is coated on its inner and outer surfaces with photocatalytic material. The intermediate tubular members 314 are omitted from Figure 9, for clarity.

A plurality of asymmetric fibres 328, each comprising a porous polymer matrix with embedded, photocatalyst particle-decorated carbon nanotubes, are arranged around the intermediate tubular member 314 of each sub-assembly 302.

As in the small-scale reactor, the intermediate tubular members 314 of the large-scale reactor 302 are closed at their top and bottom ends by the flanges. The flanges also seal around the outer surfaces of the nanofiltration membranes 316 towards their top and bottom ends. In this way, each sub-assembly 302 comprises an intermediate flow channel 320, defined between the intermediate tubular members 314 and the nanofiltration membranes 316. Flow passages are provided in the flanges to allow fluid to flow from the outer flow channel 318 into the intermediate flow channels 320.

The bore of each nanofiltration membrane 316 forms an outlet flow channel 322, which is open at least at its lower end to form an outlet for treated fluid.

The reactor 300 may be illuminated from the outside by a natural or artificial light source. Such external illumination can irradiate outwardly-facing parts of the fibres 28 and the nanofiltration membranes 316, but not inwardly-facing parts of those components. Accordingly, the inner tube 350 houses a light source 340 similar to the light source 40 described with reference to Figure 4, or the light source 180 described with reference to Figure 7. The light source 340 comprises a plurality of optical fibres 344 connected to a suitable lens (not shown) and arranged to illuminate the inwardly-facing parts of the photocatalytic fibres 328 and the inwardly-facing parts of the photocatalytic material on the outer surface of the nanofiltration membranes 316. Additionally, a further light source (not shown) is provided in the bores of each nanofiltration membrane 316, to illuminate the photocatalytic material on the inner surface of each membrane 316. Again, such light sources may be similar to those described with reference to Figure 4 or Figure 7.

In use of the large-scale reactor 300, fluid for treatment is admitted to the outer flow channel 318 through an inlet (not shown) provided in the lower flange. The fluid flows up through the outer flow channel 318, and comes into contact with the photocatalytic fibres 328 to undergo a first photocatalytic treatment stage.

On reaching the upper flange, the fluid is transferred to the intermediate flow channels 320, between the intermediate tubular members 314 and the nanofiltration membranes 316. Here, the fluid comes into contact with the photocatalytic material on the outer surface of the nanofiltration membranes 316, thereby undergoing a second photocatalytic treatment stage.

The fluid in the intermediate flow channels 320 filters through the nanofiltration membranes 316, in a filtration treatment stage, and then, in the case of a liquid fluid, flows down the inner surface of the nanofiltration membranes 316 in the outlet flow channels 322 or, in the case of a gaseous fluid, down the bore of the nanofiltration membranes 316. In doing so, the fluid comes into contact with the photocatalytic material on the inner surface of the nanofiltration membranes 316, thereby undergoing a third photocatalytic treatment stage before leaving the reactor 300 through the bottom ends of the nanofiltration membranes 316.

In this way, the operation of the large-scale reactor 300 is similar to the small-scale reactor 102 shown in Figure 5. However, in the large-scale reactor 300, a much higher volume flow of fluid can be achieved as will be appreciated from the following example.

### Example 2: large-scale photocatalytic reactor

A large-scale photocatalytic reactor 300 of the type described above with reference to Figures 8 and 9 will now be described.

In this example, which is designed for the treatment of water, the outer tubular member 312 is a borosilicate glass tube having an outside diameter of 215 mm, an inside diameter of 197 mm, and a length of 950 mm. The outer tubular member 312 is capable of withstanding an internal water pressure of 6.1 bar.

The inner tube 350 is a borosilicate glass tube having an outside diameter of 115 mm, an inside diameter of 101 mm, and a length of 950 mm. The maximum operating pressure of the inner tube 350 is 9 bar.

Twenty-four intermediate tubular members 316 are arranged between the inner tube 350 and the outer tubular member 312. The intermediate tubular members 316 are arranged in two concentric rings of twelve, with adjacent intermediate tubular members 316 in the same ring being spaced by an angular distance of 30°. The two rings are offset by 15° from one another. In this way, each of the sub-assemblies 302 of the reactor 300 can be illuminated from the outside of the reactor 300 and from the light source in the inner tube 350.

The intermediate tubular members 316 are of borosilicate glass and have an outside diameter of 16 mm, an inside diameter of 14 mm, and a length of 950 mm. The pressure on the inside and outside of each intermediate tubular member 316 is the same in use of the reactor 300, so there is no minimum pressure requirement for the intermediate tubular members 316.

A tubular ceramic nanofiltration membrane 316 is provided inside each of the intermediate tubular members 316. Each nanofiltration membrane 316 has an outside diameter of 10 mm, an inside diameter of 7 mm, and a length of 1000 mm. The pore size is 2 nm. The maximum operating pressure of the nanofiltration membranes 316 is 80 bar.

Twelve asymmetric porous photocatalytic fibres 328 are positioned equi-angularly around each of the intermediate tubular members 316, so that 288 photocatalytic fibres 328 are provided in total. Each fibre 328 has an outside diameter of 1.3 mm and a length of 1000 mm.

Water supplied to this reactor at a pressure of 6.1 bar results in an outlet flow of treated water of approximately 500-550 ml per minute.

### Modifications and variations

It will be appreciated that many modifications and variations of the above-described embodiments and examples of the present invention could be made.

For example, the intermediate tubular member could be omitted, so that the photocatalytic fibres are provided in a flow channel directly adjacent to the nanofiltration membrane. In this case, the fluid would spend less time in contact with the photocatalytic material of the fibres, but this may be acceptable where a simplified reactor design is required.

The above description refers to a reactor that operates in the orientation shown in the accompanying figures, in which liquid flows down the inside surfaces of the nanofiltration membrane under gravity. It will be appreciated, however, that a negative-pressure pump could be attached to the output of the reactor, with suitable sealing at the ends of the nanofiltration membrane, to draw fluid through the nanofiltration membrane. Such an arrangement is particularly suitable when the fluid to be treated is a gas.

Also, other reactor orientations are possible, using gravity and/or pumping as appropriate to convey fluid through the treatment stages.

Depending on the degree of treatment required, other treatment stages or enhancements to the existing treatment stages may be included in the reactor. For example, in a variation of the reactor, a stream of gaseous oxygen is admitted to the flow channel close to the fluid inlet. The presence of oxygen enhances the photocatalytic reactions taking place within the reactor. It may be desirable to include an electronic mass flow controller to control accurately the amount of oxygen entering the reactor. For example, the gas relief valve 170 described with reference to Figure 5 could be replaced by an electronic valve, arranged to allow continuous venting of oxygen from the gallery between the outer and intermediate flow channels. An additional stream of oxygen could be introduced into the inner flow channel to sweep the inner surface of the nanofiltration membrane, in order to enhance the third photocatalytic treatment stage.

The reactor components need not have a tubular configuration. Instead, a plate-type or other arrangement could be contemplated. The photocatalytic fibres need not be straight fibres, but could instead be non-linear, such as helical or tortuous. The fibres could be hollow, as shown in Figures 1 to 3, or could be solid as shown in Figure 4.

In one example of a plate-type reactor configuration, a long support fibre with embedded photocatalytic material is provided in a glass or plastics tube having a spiral configuration. The tube is arranged around a central disc-shaped nanofiltration membrane having layers of photocatalytic material deposited on each of its surfaces, similar to the nanofiltration tube of the tubular reactors described above. An inner end of the spiral tube opens onto one side of the nanofiltration membrane disc, and an outlet of the reactor is connected to the opposite side of the membrane disc. In operation, both the upper and lower sides of the spiral fibre and the membrane disc are illuminated with artificial or natural sources of UV or visible light. Fluid for treatment is caused to flow through the spiral tube, in contact with the photocatalytic material of the support fibre, towards the membrane disc, whereupon it is forced under elevated pressure through the disc to the outlet. The length of the support fibre may, for example, be approximately 10 m.

Any suitable light source can be used to illuminate the photocatalytic material. For example, a UV-light source, such as a mercury lamp, or an alternative visible-light source, such as a fluorescent strip light, could be housed in the bore of the nanofiltration membrane.

The nanofiltration membrane and the photocatalyst support fibres may carry or present the photocatalytic material in several different ways. For example, particles of photocatalytic material may be deposited inside the pores of the nanofiltration membrane, so that fluid is exposed to these particles as it passes through the pores. The particles that are deposited within the pores will alter the filtration characteristics of the membrane, but by utilising photocatalytic particles with finely-controlled particle sizes and highly-controllable deposition processes (such as chemical vapour deposition), the effect on the filtration behaviour is fully controllable.

In the photocatalytic support fibres, photocatalytic particles of titania or other materials may be embedded in or immobilised on the polymer in the form of photocatalytic particle-decorated carbon nanotubes, as previously described, or as individual particles or other physical forms, without carbon nanotubes.

Instead of polymeric fibres, other support structures could be used. For example, fibres made from photocatalytic materials such as titania could be produced. In one manufacturing approach, smaller ceramic particles from a suspension containing a distributed range of particle sizes can be formed into a thin, microporous skin layer of a fibre, in which the size of the pores depends on the size of the smaller particles. In this way, a porous (or partially porous) immobilised photocatalytic structure is provided.

Further modifications and variations could also be contemplated by a person skilled in the art without departing from the scope of the invention as defined in the appended claims.

## Claims

1. A photocatalytic reactor (10) for the treatment of contaminated fluids, comprising:
a first flow channel (18) for receiving fluid from an inlet means;
a second flow channel (22) for delivering fluid to an outlet means;
a selectively-permeable filtration membrane (16) intermediate the first and second flow channels (18, 22), having a first surface (26) that receives fluid from the first flow channel (18) and an opposite second surface (24) defining, at least in part, the second fluid flow channel (22); and
at least one photocatalyst support (28) disposed in the first flow channel (18);
wherein the first and second surfaces (24, 26) of the filtration membrane (16) and the photocatalyst support (28) each comprise an immobilised photocatalytic material capable of catalysing photocatalytic breakdown of contaminants in the fluid, in use of the reactor.

2. A photocatalytic reactor according to Claim 1, wherein the filtration membrane (16) is tubular, such that the second flow channel (22) comprises a bore of the filtration membrane (16).

3. A photocatalytic reactor according to Claim 2, wherein a bore of the filtration membrane (16) receives a light source (40) for illuminating the photocatalytic material.

4. A photocatalytic reactor according to Claim 2 or Claim 3, further comprising a first transparent tubular member (12) that defines, in part, the first flow channel (18), the first tubular member (12) being arranged concentrically around the filtration membrane (16).

5. A photocatalytic reactor according to any preceding claim, further comprising an intermediate fluid flow channel (20) for receiving fluid from the first flow channel (18), the intermediate flow channel (20) being defined, in part, by the first surface (26) of the filtration membrane (16).

6. A photocatalytic reactor according to Claim 5, further comprising an intermediate transparent member (14) having an outer surface that defines, in part, the first flow channel (18) and an inner surface that defines, in part, the intermediate flow channel (20).

7. A photocatalytic reactor (300) for the treatment of contaminated fluids, comprising:
an inlet flow channel (318) for receiving fluid from an inlet means; and
a plurality of reactor sub-assemblies (302);
each sub-assembly (302) comprising:
an outlet flow channel (322) for delivering fluid to an outlet means of the reactor;
a selectively-permeable filtration membrane (316) intermediate the inlet and outlet flow channels (318, 322), the filtration membrane (316) having a first surface that receives fluid from the inlet flow channel and an opposite second surface defining, at least in part, the outlet flow channel (322); and
a plurality of photocatalyst supports (328) disposed in the inlet flow channel (18) around the filtration membrane (316);
wherein the first and second surfaces of each of the filtration membranes (316) and each of the photocatalyst supports (328) carry an immobilised photocatalytic material capable of catalysing photocatalytic breakdown of contaminants in the fluid, in use of the reactor.

8. A photocatalytic reactor according to Claim 7, wherein each sub-assembly comprises an intermediate fluid flow channel (320) for receiving fluid from the inlet flow channel (318), the intermediate flow channel (320) being defined, in part, by the first surface of the filtration membrane (316).

9. A photocatalytic reactor according to Claim 8, further comprising a transparent intermediate member (314) having an outer surface that defines, in part, the first flow channel (318) and an inner surface that defines, in part, the intermediate flow channel (320).

10. A photocatalytic reactor according to any of Claims 7 to 9, further comprising a tubular member (312), wherein the inlet flow channel (318) comprises a bore of the tubular member (312).

11. A photocatalytic reactor according to Claim 10, further comprising an inner tube (350) that defines, in part, the inlet flow channel (318), and that receives a light source (340) for illuminating the photocatalytic material.

12. A photocatalytic reactor according to any preceding Claim, wherein the photocatalyst supports (28, 328) comprise porous polymeric fibres.

13. A photocatalytic reactor according to Claim 12, wherein the fibres (28, 328) include embedded carbon nanotubes decorated with photocatalyst particles.

14. A photocatalytic reactor according to any preceding Claim, wherein the photocatalytic material comprises a porous titania composition having a particle size distribution in which a majority of the particles do not exceed a maximum diameter of around 100 nm.

15. A method for treating contaminated fluid, the method comprising:
exposing the fluid to a first immobilised photocatalyst;
exposing the fluid to a second immobilised photocatalyst;
passing the fluid through a filtration membrane; and
exposing the fluid to a third immobilised photocatalyst.
